(19) Europäisches Patentamt / European Patent Office / Office européen des brevets

(11) EP 3 657 770 A1

(12) EUROPEAN PATENT APPLICATION

(43) Date of publication:
27.05.2020  Bulletin 2020/22

(51) Int Cl.:
$H04N\ 1/32^{(2006.01)}$

(21) Application number: 19214942.5

(22) Date of filing: 23.02.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 25.02.2014  EP 14305258

(62) Document number(s) of the earlier application(s) in accordance with Art. 76 EPC:
15706769.5 / 3 111 629

(71) Applicant: InterDigital VC Holdings, Inc.
Wilmington, DE 19809 (US)

(72) Inventors:
• ANDRIVON, Pierre
35576 Cesson-Sévigné (FR)
• BORDES, Philippe
35576 Cesson-Sévigné (FR)
• FRANCOIS, Edouard
35576 Cesson-Sévigné (FR)

(74) Representative: Rolland, Sophie
InterDigital CE Patent Holdings
20, rue Rouget de Lisle
92130 Issy-les-Moulineaux (FR)

Remarks:
This application was filed on 10.12.2019 as a divisional application to the application mentioned under INID code 62.

(54) **METHOD FOR GENERATING A BITSTREAM RELATIVE TO IMAGE/VIDEO SIGNAL, BITSTREAM CARRYING SPECIFIC INFORMATION DATA AND METHOD FOR OBTAINING SUCH SPECIFIC INFORMATION**

(57)   The present disclosure generally relates to a bitstream relative to a video signal characterized in that it carries an information data which identifies an electro-optical-transfer-function intended to be applied on the video signal before rendering the video signal on a video display.

The disclosure further relates to a method for generating such a bitstream and a method for obtaining an electro-optical-transfer-function intended to be applied on a video signal before rendering the video signal on a video display.

Fig. 2

**Description**

**1. Field.**

The present disclosure generally relates to the gamma correction in video signal.

**2. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

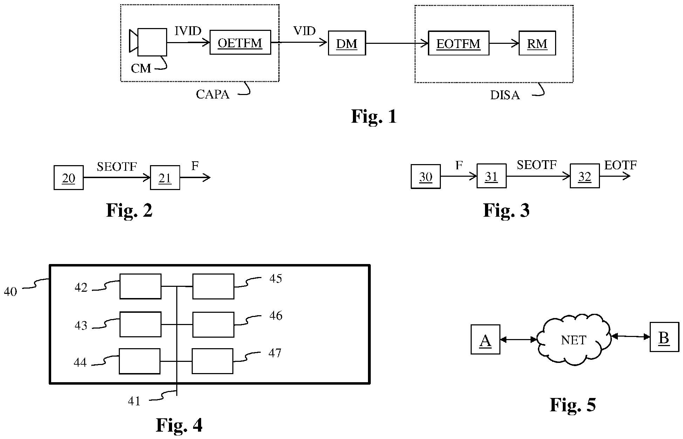

**Fig. 1** shows a block diagram which illustrates a complete video processing scheme from the capture of a video signal to its rendering on a display.

Generally speaking, this processing scheme comprises a capture apparatus CAPA from which a video signal VID is captured, a display apparatus DISA which comprises a module RM configured to compute and display a rendering of the video signal VID and, optionally, distribution means DM which may comprise an encoding/decoding scheme configured to encode/decode the video signal VID and transmission means configured to transmit the video signal VID, potentially encoded, over a communication network from the capture apparatus CAPA to the display apparatus DISA.

The capture apparatus CAPA comprises a capture means CM such a camera to capture an input video signal IVID and a module OETFM that applies an Opto-Electrical Transfer Function (OETF) to the input video signal IVID.

An Opto-Electrical Transfer Function (OETF), also abusively referred as "gamma encoding", may be applied to the input video signal IVID either during the capture of the video signal, the module is then usually embedded in the capture means CM, or during a content production which enables coding the physical linear-light signal (input of the camera).

Gamma encoding was developed originally to compensate for the input/output characteristics of cathode ray tube (CRT) displays. More precisely, a cathode ray tube (CRT) converts a video signal to light in a nonlinear way, because the electron gun's intensity (brightness) is nonlinear. The light intensity *I* is basically related to the source voltage $V_S$ according to

$$I \propto V_S{}^\gamma$$

where $\gamma$ usually belongs to the range [1.8;2.6].

To compensate for this effect, an inverse transfer function (OETF, also called gamma encoding or gamma correction) is then applied to the input video signal IVID so that the end-to-end response is nigh linear. In other words, the input video signal IVID is deliberately distorted so that, after it has been distorted again by the CRT display, the viewer sees the correct brightness.

A basic example of OETF is:

$$V_c \propto V_S{}^{1/\gamma}$$

where $V_C$ is the corrected voltage and $V_S$ is the source voltage, for example from an image sensor that converts photocharge linearly to a voltage. In our CRT example $1/\gamma$ is 1/2.2 or 0.45.

Multiple OETF have been standardized for CRT displays *(*Recommendation ITU-R BT. 709-5, Parameter values for the HDTV* standards for production and international programme exchange, April 2004*, and* Recommendation ITU-R BT.1361, Worldwide unified colorimetry and related characteristics of future television and imaging system, February 1998).

Gamma encoding is required to compensate for properties of human vision, hence to maximize the use of the bits or bandwidth relative to how humans perceive light and color. Human vision, under common illumination conditions (not pitch black nor blindingly bright), follows an approximate gamma or power function or Log function (power is < 1 here). If video are not gamma encoded, they allocate too many bits or too much bandwidth to highlights that humans cannot differentiate, and too few bits/bandwidth to shadow values that humans are sensitive to and would require more bits/bandwidth to maintain the same visual quality.

Moreover, during a content production, a colorist, usually coordinated with a Director of Photography, applies a color-grading process on the input video signal IVID. He also displayed the resulting video signal on a mastering display having a specific Electro-Optical-Transfer Function (EOTF). A mastering display is also named a reference screen.

The OETF is usually reversible. Consequently, a single flag is transmitted to the display apparatus DISA to indicate which OETF has been used. The display apparatus DISA then determines the EOTF that corresponds to the OETF designated by such a single flag. Examples of EOTF for flat panels are given by ITU Recommendations (Recommendation ITU-R BT.1886, Reference electro-optical transfer function for flat panel displays used in HDTV studio production, March 2011 or WD SMPTE 2084-20xx, Reference Electro-Optical Transfer Function for Displays Used in High Dynamic Range Studio Production, version 1.04, 20/11/2013).

However, the corresponding EOTF cannot always straightforwardly be interpreted from the OETF designated by a received flag. This is the case, for example, when the OETF comprises a tiny linear part (due to sensor camera noise in very low level) followed by a power function of 0.45 (1/2.2). This OETF is close (but not really the same) as a curve approximation of a 2.4 power function. The corresponding EOTF is then a power function of 1/2.4 and does not precisely compensate neither the tiny linear part and the power function (#2.2).

Besides, consumer electronics devices that renders the content may not have the same EOTF as the mastering display used to grade the content during the production. Consequently artistic intent may not be preserved.

Moreover, an EOTF may further take into account specific surrounding lighting conditions designed, for example, for a specific use case (for example dim lighting environment for broadcast or dark lighting environment for cinema) or for specific lighting conditions surrounding a display (user preferences, automatic detection of lighting conditions,...) or any other user preferences such as a limitation of a power consumption of a display...

## 3. Summary.

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art by signaling the EOTF intended to be applied on a video signal before rendering the video signal on a video display.

Then, the display apparatus is aware of the real EOTF of the the mastering display that a colorist used during the content production of the video signal, preserving thus the colorist's intent and presentation/rendering consistency of programs.

Moreover, signaling the real EOTF in the bitstream which is transmitted to a remote display apparatus avoids curve approximation of the EOTF that leads to artefacts in the rendering of the video signal.

Another advantage is that no-reversible OETF may be used for content production of a video signal.

The disclosure relates to a bitstream relative to a video signal characterized in that the bitstream carries an information data which identifies an electro-optical-transfer-function intended to be applied on the video signal before rendering the video signal on a video display.

According to an embodiment, the bitstream further comprises information data that represent at least one parameter relative to said identified electro-optical-transfer-function.

According to an embodiment, the electro-optical-transfer-function response is different for each chromatic channel of a mastering display and the bitstream further comprises some parameters to compensate these differences.

The disclosure further relates to a method for generating a bitstream relative to a video signal, characterized in that it comprises:

- adding an information data which identifies an electro-optical-transfer-function intended to be applied on the video signal before rendering the video signal on a video display.

The disclosure further relates to a method for obtaining an electro-optical-transfer-function intended to be applied on a video signal before rendering the video signal on a video display, characterized in that it comprises:

- obtaining an information data which identifies said electro-optical-transfer-function from a bitstream relative to the video signal.

The disclosure also relates to a computer program product, a processor readable medium and a non-transitory storage medium.

The specific nature of the disclosure as well as other objects, advantages, features and uses of the disclosure will become evident from the following description of embodiments taken in conjunction with the accompanying drawings.

**4. Brief Description of Drawings.**

In the drawings, an embodiment of the present invention is illustrated. It shows:

- **Fig. 1** shows a block diagram which illustrates a complete video processing scheme from the capture of a video signal to its rendering on a display;
- **Fig. 2** shows a block diagram of the steps of a method for generating a bitstream F in accordance with an embodiment of the disclosure;
- **Fig. 3** shows a block diagram of the steps of a method for obtaining an EOTF intended to be applied on a video signal before rendering in accordance with the disclosure;
- **Fig. 4** shows an example of an architecture of a device in accordance with an embodiment of the disclosure; and
- **Fig. 5** shows two remote devices communicating over a communication network in accordance with an embodiment of the disclosure;

Similar or same elements are referenced with the same reference numbers.

**5. Description of Embodiments.**

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

**Fig. 2** shows a block diagram of the steps of a method for generating a bitstream F in accordance with an embodiment of the disclosure.

The bitstream F is associated with a video signal VID.

At step 20, an information data SEOTF is obtained. The information data SEOTF identifies an electro-optical-transfer-function (EOTF) intended to be applied on the video signal VID before rendering the video signal on a video display of the display apparatus DISA.

According to an embodiment, the information data SEOTF identifies the EOTF of a mastering display used to grade the input video signal IVID.

At step 21, the information data SEOTF is added to the bitstream F.

According to an embodiment of the step 20, the information data SEOTF is obtained from a local or remote storing memory.

According to an embodiment of the step 11, the information data SEOTF is represented by a byte "**display_transfer_function**" which is added to the Video Usability Information (VUI) the syntax of which is defined in the standard entitled HEVC Range Extensions Draft 6, JCTVC-P1005, D. Flynn et al, February 2014. The part of the syntax of the amended VUI is given in Table 1.

Table 1

| | |
|---|---|
| ... | |
| if(video_signal_type_present_flag) { | |
| **video_format** | **u(3)** |
| **video_full_range_flag** | **u(1)** |
| **colour_description_present_flag** | **u(1)** |
| if( colour_description_present_flag) { | |
| **colour_primaries** | **u(8)** |
| **transfer_characteristics** | **u(8)** |
| **matrix_coeffs** | u(8) |
| **}** | |
| **}** | |
| **display_info_present_flag** | u(1) |
| if(display_info_present_flag){ | |
| **display_transfer_function** | u(8) |
| } | |
| **chroma_loc_info_present_flag** | u(1) |

Note the bit "**display_info_present_flag**" indicates if the bitstream carries the information data SEOTF or not.

According to an embodiment, the information data SEOTF is added to the syntax of a SEI message the syntax of which is defined in the HEVC standard.

According to an embodiment, the information data SEOTF is represented by a byte "**display_transfer_function**" which is added to the mastering-display-color-volume SEI message the syntax of which is defined in the paper entitled Indication of SMPTE 2084 and 2085 and carriage of 2086 metadata in HEVC, JCTVC-P0084, C. Fogg & J. Helman, January 2014.

An example of the amended mastering-display-color-volume SEI message is given in Table 2.

Table 2

| mastering_display_colour_volume( payloadSize ) { | **Descriptor** |
|---|---|
| for(c = 0; c< 3; c++) { | |
| **display_primaries_x** [c] | u(16) |
| **display_primaries_y** [c] | u(16) |
| **}** | |

(continued)

| white_point_x | u(16) |
|---|---|
| white_point_y | u(16) |
| max_display_mastering_luminance | u(32) |
| min_display_mastering_luminance | u(32) |
| display_transfer_function | u(8) |
| } | |

Table 3 gives some examples of such a EOTF which may be a function of a normalized input video signal level (black at V = 0, white at V = 1) with a nominal range of 0 to 1. $L_c$ is the linear optical intensity output of the reference display. When the value of **display_transfer_function** is equal to 1, $L_W$ (with $L_W$ = max_display_mastering_luminance) indicates display luminance for white in cd/m$^2$ and $L_B$ (with $L_B$ = min_display_mastering_luminance) indicates display luminance for black in cd/m$^2$ (as referred in Rec. ITU-R BT.1886). When the **display_transfer_function** syntax element is not present, the value of **display_transfer_function** is inferred to be equal to 2 (the display transfer function is unspecified or is determined by the application).

Table 3

| Value | EOTF |
|---|---|
| 1 | $L_c = a(\max[(V + b), 0]^\gamma \qquad \gamma = 2.40$ <br><br> $a = (L_W{}^{1/\gamma} - L_B{}^{1/\gamma})^\gamma \qquad b = \dfrac{L_B{}^{1/\gamma}}{L_w{}^{1/\gamma} - L_b{}^{1/\gamma}}$ |
| 4 | $$Lc = \left(\frac{\max\left[\left(V^{1/m} - c_1\right), 0\right]}{c_2 - c_3 V^{1/m}}\right)^{1/n}$$ <br><br> $$m = \frac{2523}{4096} \times 128 = 78.84375$$ <br><br> $$c_1 = c_3 - c_2 + 1 = \frac{3424}{4096} = 0.8359375$$ <br><br> $$c_2 = \frac{2413}{4096} \times 32 = 18.8515625$$ <br><br> $$n = \frac{2610}{4096} \times \frac{1}{4} = 0.1593017578125$$ <br><br> $$c_3 = \frac{2392}{4096} \times 32 = 18.6875$$ |
| 5 | $Lc = aV + b$ <br> $a = 1$ and <br> $b = 0$ <br> for $1 > V \geq 0$ |

According to a variant, the bitstream F further comprises information data that represent at least one parameter relative to said identified EOTF.

For example, a parameter relative to said identified EOTF is the number of LED per area of a LED backlight display that be lit up.

This may be used when power consumption is a concern and an economic/degraded mode/grading may make sense in order to preserve the artistic intent.

According to a variant, the EOTF intended to be used before rendering the video signal VID on a video display of the display apparatus DISA is derived from a transmitted standard EOTF. Some parameters of a specific mastering display are then also transmitted to compensate from the standard EOTF.

According to a variant, the EOTF response is different for each chromatic channel of the mastering display and some parameters relative to said identified EOTF are transmitted to compensate these differences.

This variant is advantageous especially for HDR display where a small deviation of codewords in high luminance may have a huge impact on the reconstructed (tri)chromatic signal (e.g. hue shift or wrong skin tone).

Table 4

**Fig. 3** shows a block diagram of the steps of a method for obtaining an EOTF intended to be applied on a video signal before rendering the video signal on a video display in accordance with the disclosure.

At step 30, a bitstream F is obtained either from a local or remote storing memory.

At step 31, an information data SEOTF is obtained from the bitstream F.

At step 32, an EOTF is then obtained from the obtained information data SEOTF.

According to the embodiments and variants described in relation with the **Fig. 3,** the information SEOTF directly identifies the electro-optical-transfer-function from the bitstream F, or, possibly, be associated with ad hoc parameters, with a specific chromatic channel of a reference display or with correction factors or correction model.

As explained before, the EOTF is then determined using such associated data once obtained from the bitstream F.

On **Fig. 1-3,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the invention are implemented using either pure hardware, for example using dedicated hardware such ASIC or FPGA or VLSI, respectively « Application Specific Integrated Circuit », « Field-Programmable Gate Array », «Very Large Scale Integration », or from several integrated electronic components embedded in a device or from a blend of hardware and software components.

**Fig. 4** represents an exemplary architecture of a device 40 which may be configured to implement a method described in relation with **Fig. 1-3.**

Device 40 comprises following elements that are linked together by a data and address bus 41:

- a microprocessor 42 (or CPU), which is, for example, a DSP (or Digital Signal Processor);
- a ROM (or Read Only Memory) 43;
- a RAM (or Random Access Memory) 44;
- an I/O interface 45 for reception of data to transmit, from an application; and
- a battery 46

According to a variant, the battery 46 is external to the device. Each of these elements of **Fig. 4** are well-known by those skilled in the art and won't be disclosed further. In each of mentioned memory, the word « register » used in the specification can correspond to area of small capacity (some bits) or to very large area (e.g. a whole program or large amount of received or decoded data). ROM 43 comprises at least a program and parameters. Algorithm of the methods according to the invention is stored in the ROM 43. When switched on, the CPU 42 uploads the program in the RAM and executes the corresponding instructions.

RAM 44 comprises, in a register, the program executed by the CPU 42 and uploaded after switch on of the device 40, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to different embodiments, the bitstream F is sent to a destination. As an example, the bitstream F is stored in a local or remote memory, e.g. a video memory (44) or a RAM (44), a hard disk (43). In a variant, one or both bitstreams are sent to a storage interface (45), e.g. an interface with a mass storage, a flash memory, ROM, an optical disc or a magnetic support and/or transmitted over a communication interface (45), e.g. an interface to a point to point link, a communication bus, a point to multipoint link or a broadcast network.

According to different embodiments, the bitstream F is obtained from a source. Exemplarily, the bitstream is read from a local memory, e.g. a video memory (44), a RAM (44), a ROM (43), a flash memory (43) or a hard disk (43). In a variant, the bitstream is received from a storage interface (45), e.g. an interface with a mass storage, a RAM, a ROM, a flash memory, an optical disc or a magnetic support and/or received from a communication interface (45), e.g. an interface to a point to point link, a bus, a point to multipoint link or a broadcast network.

According to different embodiments, device 40 being configured to implement a method described in relation with **Fig. 2-3,** belongs to a set comprising:

- a mobile device ;
- a communication device ;
- a game device ;
- a tablet (or tablet computer);
- a laptop ;
- a still image camera;
- a video camera ;
- an encoding chip;
- a still image server; and
- a video server (e.g. a broadcast server, a video-on-demand server or a web server).

According to an embodiment illustrated in **Fig. 5,** in a transmission context between two remote devices A and B over a communication network NET, the device A comprises means which are configured to implement a method as described in relation with the **Fig. 2** and the device B comprises means which are configured to implement a method for decoding as described in relation with **Fig. 3.**

According to a variant of the invention, the network is a broadcast network, adapted to broadcast still images or video images from device A to decoding devices including the device B.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for generating a bitstream relative to a video signal produced from an optical-electro-transfer-function, **characterized in that** it comprises adding an information data which identifies an electro-optical-transfer-function intended to be applied on the video signal before rendering the video signal on a video display, said electro-optical-transfer-function being the electro-optical-transfer-function of a mastering display used to produce the video signal, said electro-optical-transfer-function compensating for a not-reversible optical-electro-transfer-function used to produce the video signal.

2. A method for obtaining an electro-optical-transfer-function intended to be applied on a video signal before rendering the video signal on a video display, **characterized in that** it comprises obtaining an information data which identifies said electro-optical-transfer function from a bitstream relative to the video signal produced from an optical-electro-transfer-function, said electro-optical-transfer-function being the electro-optical-transfer-function of a mastering display used to produce the video signal, said electro-optical-transfer-function compensating for a not-reversible optical-electro-transfer-function used to produce the video signal.

3. A computer program product comprising program code instructions to execute the steps of the method according to claim 1 or 2 when this program is executed on a computer.

4. A processor readable medium having stored therein instructions for causing a processor to perform at least the steps of the method according to claim 1 or 2.

5. Non-transitory storage medium carrying instructions of program code for executing steps of the method according to claim 1 or 2, when said program is executed on a computing device.

IVID
CM → OETFM → VID → DM → EOTFM → RM

CAPA

DISA

**Fig. 1**

SEOTF
20 → 21 → F

**Fig. 2**

F        SEOTF        EOTF
30 → 31 → 32 →

**Fig. 3**

40
42 → 45
43 → 46
44 → 47
41

**Fig. 4**

A ← NET → B

**Fig. 5**

Europäisches Patentamt

European Patent Office

Office européen des brevets

**EUROPEAN SEARCH REPORT**

Application Number

EP 19 21 4942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/039730 A2 (DOLBY LAB LICENSING CORP [US]; MILLER JON S [US]; NEZAMABADI MAHDI [US]) 21 March 2013 (2013-03-21) * paragraph [0042] - paragraph [0044]; figure 1 * | 1-5 | INV. H04N1/32 |
| A | WO 2008/156456 A1 (THOMSON LICENSING [FR]; LEE BONGSUN [US]) 24 December 2008 (2008-12-24) * paragraph [0016] - paragraph [0018] * | 1-5 | |
| A | WO 2013/147925 A1 (THOMSON LICENSING [FR]; LOEFFLER MARKUS [US]; ASH ARDEN [US]; GAFFNEY) 3 October 2013 (2013-10-03) * page 5, line 6 - page 6, line 25; claim 1; figure 1 * | 1-5 | |
| A | US 2013/155330 A1 (LONGHURST PETER W [CA] ET AL) 20 June 2013 (2013-06-20) * abstract * * paragraph [0057] - paragraph [0074] * | 1-5 | |

TECHNICAL FIELDS SEARCHED (IPC)

H04N

The present search report has been drawn up for all claims

| Place of search | Date of completion of the search | Examiner |
|---|---|---|
| Munich | 17 March 2020 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 4942

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2020

| Patent document cited in search report | | Publication date | Patent family member(s) | | | Publication date |
|---|---|---|---|---|---|---|
| WO 2013039730 | A2 | 21-03-2013 | US | 2014341272 | A1 | 20-11-2014 |
| | | | WO | 2013039730 | A2 | 21-03-2013 |
| WO 2008156456 | A1 | 24-12-2008 | BR | PI0721634 | A2 | 05-02-2013 |
| | | | CN | 101682684 | A | 24-03-2010 |
| | | | EP | 2165522 | A1 | 24-03-2010 |
| | | | JP | 2010530992 | A | 16-09-2010 |
| | | | KR | 20100029212 | A | 16-03-2010 |
| | | | US | 2010128067 | A1 | 27-05-2010 |
| | | | WO | 2008156456 | A1 | 24-12-2008 |
| WO 2013147925 | A1 | 03-10-2013 | CN | 104205795 | A | 10-12-2014 |
| | | | EP | 2832088 | A1 | 04-02-2015 |
| | | | JP | 2015514367 | A | 18-05-2015 |
| | | | KR | 20140146592 | A | 26-12-2014 |
| | | | US | 2015009227 | A1 | 08-01-2015 |
| | | | WO | 2013147925 | A1 | 03-10-2013 |
| US 2013155330 | A1 | 20-06-2013 | US | 2013155330 | A1 | 20-06-2013 |
| | | | US | 2015195499 | A1 | 09-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Parameter values for the HDTV* standards for production and international programme exchange. *Recommendation ITU-R BT. 709-5,* April 2004
- Worldwide unified colorimetry and related characteristics of future television and imaging system. *Recommendation ITU-R BT.1361,* February 1998
- Reference electro-optical transfer function for flat panel displays used in HDTV studio production. *Recommendation ITU-R BT.1886,* March 2011
- Reference Electro-Optical Transfer Function for Displays Used in High Dynamic Range Studio Production. *WD SMPTE 2084-20xx,* 20 November 2013
- **D. FLYNN et al.** *HEVC Range Extensions Draft 6, JCTVC-P1005,* February 2014
- **C. FOGG ; J. HELMAN.** Indication of SMPTE 2084 and 2085 and carriage of 2086 metadata. *HEVC, JCTVC-P0084,* January 2014